# FASCICULE DE BREVET EUROPEEN

(11) **EP 0 571 247 B1**
(45) Date de publication et mention de la délivrance du brevet: **17.04.1996**
(21) Numéro de dépôt: 93401219.6
(22) Date de dépôt: 13.05.1993
(51) Int. Cl.: F16L 37/14

(54) **Dispositif de raccord rapide, par encliquetage, d'un organe ou d'un ensemble d'organes tubulaires à un ou des embouts**
Schnellkupplung zur Schnappverbindung eines Rohrelements oder einer Montage mehrerer Rohrelemente an einem oder mehreren Rohrenden
Quick-acting coupling for connecting a tubular element or an assembly of tubular elements to one or more openings

(30) Priorité: 21.05.1992 FR 9206195
(43) Date de publication de la demande: 24.11.1993
(73) Titulaire: HUTCHINSON, F-75008 Paris (FR)
(72) Inventeur: Godeau, Denis, F-45260 Vieilles Maison/Joudey (FR); Exandier, Philippe, F-45200 Montargis (FR)
(74) Mandataire: Orès, Bernard

(56) Documents cités:
- DE-C- 4 037 308
- DE-U- 8 624 767
- US-A- 3 314 696
- US-A- 3 403 930

## Description

L'invention est relative à un dispositif de raccord rapide, par encliquetage, d'un organe tubulaire ou d'un ensemble d'organes tubulaires à un ou des embouts et elle concerne, notamment, un tel dispositif pour l'assemblage des tuyaux d'eau du circuit de refroidissement d'un moteur de véhicule automobile aux embouts d'entrée et de sortie d'un échangeur de chaleur ou aérotherme dudit véhicule.

Elle vise, plus particulièrement, un dispositif de raccord du type permettant un montage et démontage rapides à l'aide d'une épingle élastique dont des branches sont sensiblement parallèles et logées, -avant assemblage du dispositif-, dans des ouvertures de passage ménagées dans un organe tubulaire, tandis que lesdites branches sont logées, -dans la condition d'assemblage du dispositif,- dans une gorge transversale formée dans la paroi de l'embout, lequel présente une portée tronconique pour rendre opératoire l'épingle. Un tel dispositif à épingle en U est montré, par exemple, par US-3 314 696 ou FR-A-2 280 852 qui ne visent, cependant, que la liaison d'un seul organe tubulaire à un embout, d'une part et qui ne permettent pas, d'autre part, de s'assurer visuellement de façon simple que le raccordement a été effectué d'une façon satisfaisante. Les dispositifs selon ces documents, par conséquent, ne permettent pas de résoudre le problème posé qui est celui de fournir un dispositif de raccord rapide de plusieurs organes tubulaires à des embouts et de fournir une indication quant à la réalisation satisfaisante du raccordement après encliquetage.

Si le problème de la solidarisation de plusieurs organes tubulaires à des embouts est évoqué dans DE-40 37 308, il n'est résolu qu'à l'aide d'une multiplicité d'éléments de liaison et sans souci particulier de la visualisation satisfaisante du raccordement.

C'est, par conséquent, un but général de la présente invention de résoudre le problème posé par un dispositif de construction simple et peu coûteuse, de mise en oeuvre facile et qui élimine tout risque de désassemblage intempestif.

C'est, aussi, un but de l'invention de fournir un tel dispositif qui ne nécessite pas pour son montage d'effort élevé et qui, cependant, garantit une étanchéité satisfaisante après assemblage.

C'est, aussi, un but de l'invention de fournir un tel dispositif de raccord qui permette, par simple contrôle visuel, de vérifier que la condition de verrouillage est réalisée.

Un dispositif de raccord rapide par encliquetage d'un organe ou d'un ensemble d'organes tubulaires à un ou des embouts, notamment pour l'assemblage des tuyaux d'eau du circuit de refroidissement d'un moteur de véhicule automobile aux embouts d'entrée et de sortie d'un échangeur de chaleur ou aérotherme dudit véhicule dans lequel les tuyaux d'eau (ou durites) sont solidaires desdits organes tubulaires, l'étanchéité entre un organe et un embout ou entre les organes et les embouts qui sont réunis par un élément disposé perpendiculairement à leur axe longitudinal étant assurée par un ou des joints interposés entre eux, chaque embout présentant, à côté d'une extrémité libre cylindrique une rampe tronconique, est caractérisé, selon l'invention en ce que :
. l'élément réunissant lesdits organes tubulaires ou associé à l'organe tubulaire est une platine disposée au voisinage d'une ou d'ouvertures de passage ménagée(s) dans ledit ou lesdits organe(s) et dirigée(s) sensiblement transversalement auxdits axes longitudinaux ;
. chaque embout présente une gorge adjacente à la rampe tronconique et qui est dirigée en correspondance des passages du ou des organes tubulaires ;
. il comprend au moins une épingle élastique dont chaque branche logée dans une desdites ouvertures se termine à son extrémité libre par un retour dirigé sensiblement perpendiculairement à ladite branche et dont une barrette reliant lesdites branches est dirigée généralement perpendiculairement auxdites ouvertures, les retours coopérant avec des pattes de la platine conformées de manière telle qu'elles guident lesdits retours lorsque lesdites rampes écartent élastiquement les branches de l'épingle, -à l'introduction d'un embout dans un organe tubulaire ou des embouts dans les organes tubulaires-, pour les faire passer d'une première position en laquelle la barrette est au voisinage immédiat dudit ou desdits organe(s) tubulaire(s) à une seconde position, -qui est celle d'assemblage du raccord-, et où la barrette est plus distante dudit ou desdits organe(s).

Lorsque le dispositif est placé de manière que la barrette reliant les branches de l'épingle élastique soit sensiblement horizontale, la première position peut être qualifiée de position "basse" et la seconde, de position "haute", la plus ou moins grande distance de la barrette par rapport aux organes tubulaires et/ou à la platine fournissant, -quelle que soit la position du dispositif par rapport aux organes auxquels il est associé-, une indication simple et sûre de ce que le raccord est assemblé de façon satisfaisante à la fin de l'encliquetage qui amène les embouts dans les organes tubulaires.

Selon une autre caractéristique de l'invention, les pattes de la platine sont également conformées pour limiter des encoches qu'elles masquent en partie et dans lesquelles viennent se loger lesdits retours à la fin du mouvement d'introduction des embouts dans les organes tubulaires, c'est-à-dire lorsque les branches de l'épingle élastique sont logées dans lesdites gorges.

On évite, de la sorte, tout risque de démontage accidentel, l'épingle ne pouvant être retirée, pour un désassemblage des embouts par rapport aux organes tubulaires, qu'à l'aide d'un outil permettant d'écarter lesdits retours de l'épingle pour les faire sortir desdites encoches et les faire échapper auxdites pattes de la platine.

L'invention prévoit que la platine qui réunit les organes tubulaires, ou qui est associée à un organe tubulaire unique, soit rigide ou, en variante, présente une certaine souplesse conférant au dispositif une possibilité d'adaptation.

Dans ce dernier cas, l'épingle élastique au lieu d'être en U, -comme pour une platine rigide-, est en forme de M ou, en variante, résulte de la liaison entre elles de deux épingles en U.

L'invention sera bien comprise par la description qui suit, faite en référence au dessin annexé dans lequel :
- la figure 1 est une vue schématique, en perspective éclatée, d'un dispositif selon l'invention avant réunion de ses éléments constitutifs ;
- la figure 2 est une vue analogue à celle de la figure 1, mais avec les éléments constitutifs réunis et suivant une autre direction ;
- la figure 3 est une vue analogue à celle des figures 1 et 2, mais après montage du dispositif et avec arrachement partiel ;
- la figure 4 est une vue par bout du dispositif montrant la condition de l'épingle élastique avant et après l'assemblage ;
- la figure 4A est une vue en coupe, par un plan transversal proche de la platine, des organes tubulaires ;
- la figure 5 est une vue en coupe selon la ligne 5-5 de la figure 4 pour la condition d'assemblage.

Le dispositif de raccord illustré aux figures est du type de ceux destinés à l'assemblage des tuyaux d'eau d'un circuit de refroidissement d'un moteur de véhicule automobile aux embouts d'entrée et de sortie d'un échangeur de chaleur ou aérotherme dudit véhicule. Il va de soi, cependant, que l'invention n'est pas limitée à un tel dispositif, mais trouve application à tous raccords permettant un montage et démontage rapides d'un ensemble d'organes tubulaires à des embouts à l'aide d'une épingle élastique ou encore d'un seul organe tubulaire à un seul embout.

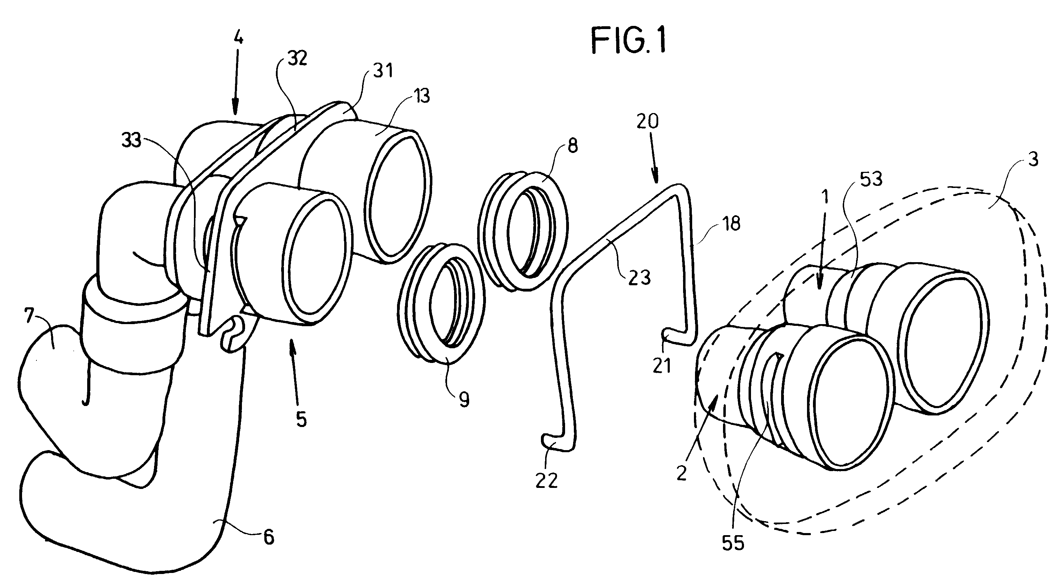

Dans le dispositif décrit et représenté, les embouts 1 et 2, qui font saillie de l'échangeur de chaleur, -plus précisément de sa boîte à eau 3-, sont prévus pour être assemblés avec des organes tubulaires 4 et 5 auxquels sont fixés les tuyaux d'eau souples ou durites, 6 et 7, du circuit de refroidissement d'un moteur de véhicule automobile, figure 1, avec interposition de joints d'étanchéité 8 et 9, figures 1 et 5. Chaque organe tubulaire 4, 5, avantageusement en matière plastique moulée, est conformé suivant des parties cylindriques 10, 11, 12, 13 de même axe A et de diamètres progressivement croissants pour ménager ainsi un premier épaulement 14 et un second épaulement 15 sur lequel prend appui le joint d'étanchéité 8 ou 9. La partie cylindrique 13 de chaque organe tubulaire, la plus distante du tuyau souple 6 ou 7, est découpée suivant deux ouvertures ou fentes transversales, diamétralement opposées 16, 17 dont la largeur est suffisante pour loger les branches parallèles 18, 19 d'une épingle élastique en U, 20.

Cette dernière, en métal ou en matière plastique suffisamment résistante et élastique présente, aux extrémités libres des branches 18, 19, des retours 21, 22 dirigés sensiblement perpendiculairement auxdites branches et, perpendiculairement également auxdites branches, une barrette rectiligne 23 qui relie leurs autres extrémités.

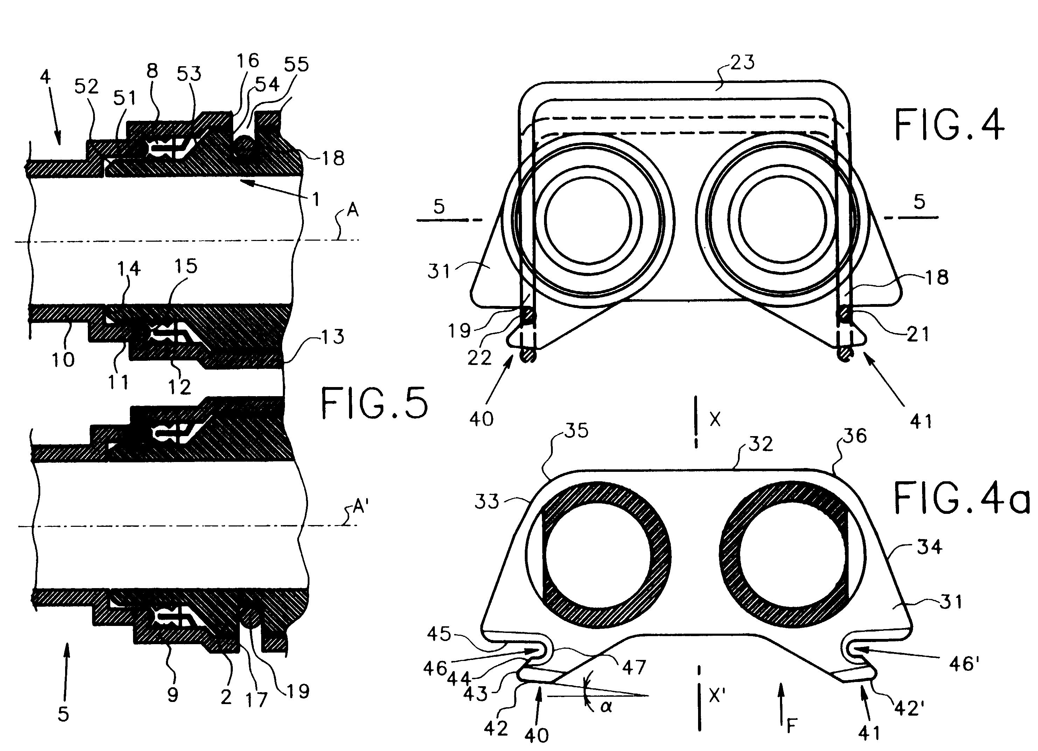

Les organes tubulaires 4 et 5 sont réunis par une entretoise 30, d'une part et, d'autre part, entre ladite entretoise et les extrémités libres des parties cylindriques 13 par une platine 31 disposée au voisinage des fentes ou ouvertures de passage 16 et 17 sensiblement perpendiculairement à l'axe longitudinal A de l'organe 4 et à l'axe A' de l'organe 5. Comme bien visible sur les figures 4 et 4A, la platine 31 a un contour d'ensemble quelque peu trapézoïdal et est ainsi limitée par un bord 32 (formant la petite base du trapèze) des bords latéraux 33 et 34 reliés à la petite base par des angles arrondis 35 et 36, respectivement et, dans ce qui pourrait être considéré comme les autres angles du trapèze, par des pattes 40 et 41. Chacune d'entre elles est conformée, figure 4A, suivant un bord libre d'extrémité 42, légèrement incliné d'un angle α par rapport à un plan perpendiculaire à l'axe de symétrie X-X' de la platine, ledit bord se prolongeant, en direction du bord 33, par une extrémité arrondie 43 puis un bord 44, lequel limite avec un bord 45 sensiblement perpendiculaire à l'axe X-X' une encoche 46 dont le fond 47 est d'un diamètre juste supérieur à celui des retours 21 et 22 de l'épingle élastique 20. Les encoches 46 (pour la patte 40) et 46' (pour la patte 41), prévues pour recevoir les retours 21 et 22 des branches de l'épingle sont "masquées" par les pattes 40, 41 lorsque la platine 31 est regardée dans le sens de la flèche F de la figure 4A, c'est-à-dire de bas en haut si l'on suppose que la barrette 23 de l'épingle 20 est disposée sensiblement horizontalement et que le bord 32 de la platine est le bord supérieur.

Avec les organes tubulaires et l'épingle élastique 20 qui viennent d'être décrits sont propres à coopérer les embouts 1 et 2 dont chacun présente une première partie cylindrique 51 de diamètre extérieur conjugué de celui de la partie cylindrique 11 de l'organe tubulaire 4 ou 5, d'une part, et qui est légèrement supérieur à celui du diamètre interne du joint d'étanchéité 8 ou 9, d'autre part, l'extrémité libre de la partie 51 étant chanfreinée pour faciliter l'introduction de l'embout dans l'organe tubulaire et son glissement le long du joint 8 ou 9 qui est avantageusement du type à lèvres avec armature.

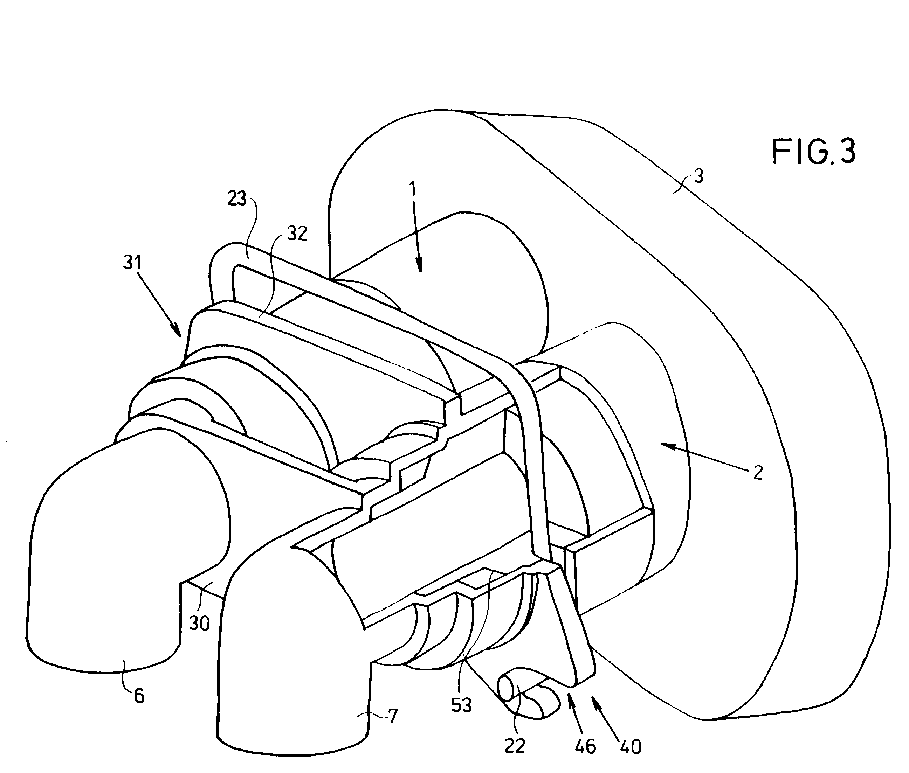

Comme bien montré sur les figures 3 et 5, la partie cylindrique 51 de l'embout 1 ou 2 se prolonge à distance de son extrémité chanfreinée 52 par une rampe tronconique 53, inclinée vers l'arrière de l'embout, la face arrière 54 de la rampe 53 limitant une gorge 55 de réception d'une des branches 18, 19 de l'épingle en U, 20.

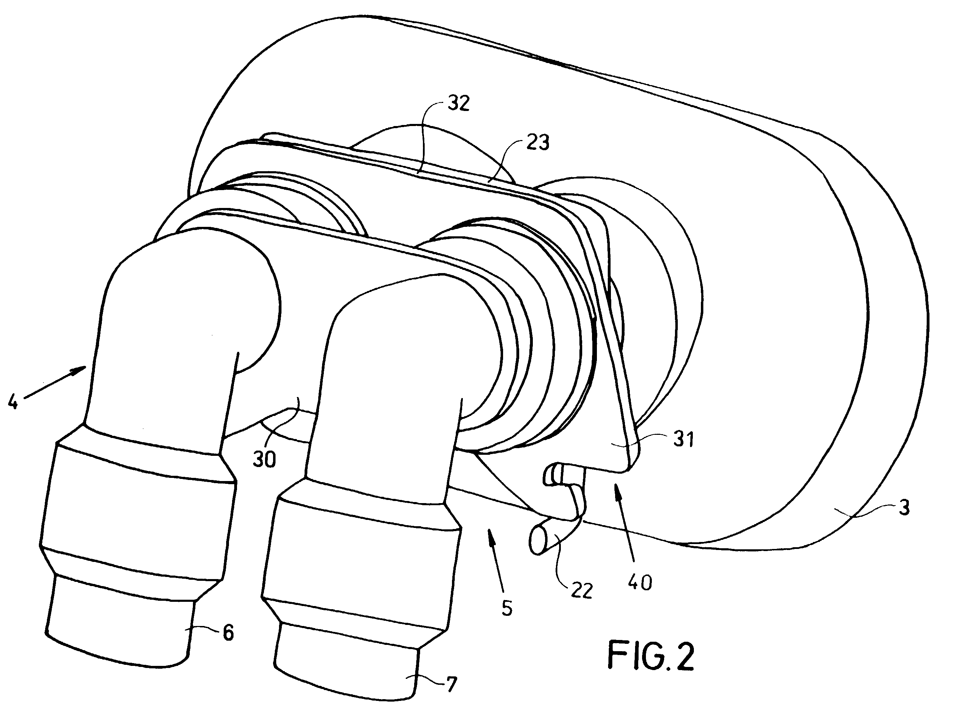

La condition initiale des organes tubulaires 4 et 5 et de l'épingle 20 est celle montrée sur la figure 2 et en traits mixtes sur la figure 4, c'est-à-dire avec les retours 21 et 22 de l'épingle au contact des bords comme 42 et 42' des pattes 40 et 41, respectivement, et la barrette 23 au voisinage des organes tubulaires 4 et 5. Lorsque, pour l'assemblage du dispositif de raccord, ces derniers sont rapprochés des embouts 1 et 2 de l'échangeur de chaleur, les branches de l'épingle en U sont alors écartées l'une de l'autre au-delà de leur position initiale par les rampes 53 des embouts 1 et 2 et, au fur et à mesure que les embouts se rapprochent des organes tubulaires, les retours 21 et 22 de l'épingle glissent sans difficulté sur les bords légèrement inclinés 42 et 42' jusqu'à franchir les extrémités arrondies 43. Lorsque la face arrière 54 de chaque rampe 53 des embouts est sensiblement alignée avec la face postérieure des fentes ou passages 16, 17, les branches de l'épingle élastique 20 pénètrent dans les gorges 55. L'immobilisation du dispositif de raccord est alors assurée tandis que, simultanément, les retours 21 et 22 de l'épingle viennent se loger dans les encoches 46 et 46' de la platine 31 : la barrette 23 est alors comme montrée en trait plein sur les figures 3 et 4, c'est-à-dire plus distante des organes tubulaires qu'elle ne l'était dans la condition initiale, indiquant que le raccordement a été effectué d'une façon satisfaisante.

L'effort de montage est faible, inférieur à 10 daN et le fait que les retours 21 et 22 de l'épingle élastique 20 soient logés dans les encoches 46 et 46' prévient tout risque de démontage accidentel.

Pour démonter l'assemblage, les branches 18 et 19 de l'épingle en U doivent être tout d'abord écartées à l'aide d'un outil approprié avant qu'une traction sur les organes tubulaires 4 et 5 et les durites qui leur sont associées, à l'écartement des embouts 1 et 2, n'entraîne la libération de l'assemblage.

L'invention n'est pas, bien entendu, limitée à la forme de réalisation qui vient d'être décrite.

Ainsi, elle envisage dans son cadre, des réalisations dans lesquelles les organes tubulaires ne sont pas liés rigidement l'un à l'autre mais, au contraire, avec une certaine possibilité d'adaptation et cela en les réunissant par une entretoise et/ou une platine semblable à la platine 31 mais douée d'une certaine souplesse obtenue, par exemple, par un assemblage avec jeu ou à l'aide de deux demi-pièces elles-mêmes réunies avec jeu ou possibilité de déplacement. Dans un tel cas le dispositif comprend soit deux épingles élastiques en U, reliées entre elles avec possibilité de déplacement relatif, soit une épingle en M, légèrement déformable dans la partie constituant sa barrette qui au lieu d'être rectiligne, -comme dans une épingle en U-, est alors en forme V, plus ou moins marqué.

## Revendications

1. Dispositif de raccord rapide par encliquetage d'un organe tubulaire ou d'un ensemble d'organes tubulaires à un ou des embouts, notamment pour l'assemblage des tuyaux d'eau (6, 7) du circuit de refroidissement d'un moteur de véhicule automobile aux embouts (1, 2) d'entrée et de sortie d'un échangeur de chaleur ou aérotherme dudit véhicule dans lequel les tuyaux d'eau (ou durites) sont solidaires desdits organes tubulaires, l'étanchéité entre un organe et un embout ou les organes (4, 5) et les embouts (1, 2)) qui sont réunis par un élément disposé sensiblement perpendiculairement à leur axe longitudinal (A, A') étant assurée par des joints (8, 9) interposés entre eux, chaque embout (1, 2) présentant, à côté d'une extrémité libre cylindrique, une rampe tronconique (53), caractérisé en ce que :
. l'élément réunissant les organes tubulaires ou associé à l'organe tubulaire est une platine (31) disposée au voisinage d'une ou d'ouverture(s) de passage (16, 17) ménagée(s) dans ledit ou lesdits organe(s) et dirigée(s) sensiblement transversalement auxdits axes longitudinaux ;
. chaque embout (1, 2) présente une gorge (55) adjacente à la rampe tronconique (53) et qui est dirigée en correspondance des passages (16, 17) des organes tubulaires ;
. il comprend au moins une épingle élastique (20) dont chaque branche (18, 19) logée dans une desdites ouvertures (16, 17) se termine à son extrémité libre par un retour (21, 22) dirigé sensiblement perpendiculairement à ladite branche et dont une barrette (23) reliant lesdites branches est dirigée généralement perpendiculairement auxdites ouvertures (16, 17), les retours (21, 22) coopérant avec des pattes (40, 41) de la platine conformées de manière telle qu'elles guident lesdits retours lorsque lesdites rampes (53) écartent élastiquement les branches (18, 19) de l'épingle, -à l'introduction d'un embout dans un organe tubulaire ou des embouts (1, 2) dans les organes tubulaires (4, 5)-, pour les faire passer d'une première position en laquelle la barrette (23) est au voisinage immédiat dudit ou desdits organe(s) tubulaire(s) (4, 5) en une seconde position, -qui est celle d'assemblage du raccord-, où la barrette (23) est plus distante dudit ou desdits organe(s) tubulaire(s) (4, 5).

2. Dispositif selon la revendication 1, caractérisé en ce que lesdites pattes (40, 41) de la platine (31) limitent des encoches (46, 46') qu'elles masquent en partie et dans lesquelles viennent se loger lesdits retours (21, 22) d'une épingle élastique en U à la fin du mouvement d'introduction des embouts (1, 2) dans lesdits organes tubulaires (4, 5), c'est-à-dire lorsque les branches de l'épingle élastique (20) sont logées dans lesdites gorges (55).

3. Dispositif selon l'une des revendications 1 ou 2, caractérisé en ce que les organes tubulaires sont reliés l'un à l'autre avec un certain degré de souplesse.

4. Dispositif selon la revendication 3, caractérisé en ce que la souplesse de liaison des organes tubulaires entre eux résulte d'un assemblage avec jeu ou de la liaison par deux demi-pièces elles-mêmes réunies avec jeu ou possibilité de déplacement relatif.

5. Dispositif selon la revendication 3 ou la revendication 4, caractérisé en ce qu'il comprend deux épingles élastiques en U reliées entre elles avec possibilité de déplacement relatif.

6. Dispositif selon la revendication 3 ou la revendication 4, caractérisé en ce qu'il comprend une épingle élastique en M.

## Patentansprüche

1. Vorrichtung zum schnellen Anschluß eines röhrenförmigen Elements oder eines Komplexes röhrenförmiger Elemente an einen oder mehrere Stutzen, im besonderen zum Verbinden von Wasserleitungen (6, 7) des Kühlkreislaufes eines Motors eines Autos mit den Eingangstutzen (1, 2) und den Ausgangsstutzen eines Wärmeaustauschers oder eines Heizlüfters des besagten Fahrzeuges, in dem die besagten Wasserleitungen (oder Rohre) mit den besagten röhrenförmigen Elementen verbunden sind, wobei die Dichtheit zwischen einem Element und einem Stutzen oder den Elementen (4, 5) oder den Stutzen (1, 2), die durch ein zu ihrer Längsachse (A, A') annähernd senkrecht stehend angeordnetes Element verbunden sind, durch die zwischen ihnen angebrachten Verbindungsstücke (8, 9) gewährleistet wird und jeder Stutzen (1, 2) auf der Seite eines freien zylinderförmigen Endes ein konisches Führungselement (53) darstellt, das dadurch charakterisiert ist, daß:
- das Element, das die röhrenförmigen Elemente vereinigt oder an das röhrenförmige Element angeschlossen ist, eine Absperrplatte (31) ist, die in der Nähe einer oder der Durchgangsöffnung(en) (16, 17), die in dem oder den besagten Elementen eingerichtet und ziemlich genau quer zu den besagten Längsachsen ausgerichtet sind;
- jeder Stutzen (1, 2) eine Nut (55) besitzt, die sich an das konische Führungselement (53) anschließt und die entsprechend der Durchgänge (16, 17) der röhrenförmigen Elemente ausgerichtet ist;
- es mindestens eine elastische Klammer (20) besitzt, von der jeder Arm (18, 19) in einer der besagten Öffnungen (16, 17) gelagert ist und an seinem freien Ende in einem zu dem besagten Arm annähernd senkrecht stehenden Widerhaken (21, 22) endet und deren Verschluß (23), der die beiden Arme miteinander verbindet, im allgemeinen zu den besagten Öffnungen (16, 17) annähernd senkrecht steht, wobei die Widerhaken (20, 21) mit den Laschen (40, 41) der Absperrplatte zusammenwirken, so daß diese die besagten Widerhaken führen, wenn die besagten Führungselemente (53) elastisch die Arme (18, 19) der Klammer spreizen, - bei der Einführung eines Stutzens in ein röhrenförmiges Element oder von mehreren Stutzen (1, 2) in die röhrenförmigen Elemente (4, 5) -, um sie aus einer ersten Stellung, in der der Verschluß (23) in nächster Nachbarschaft zu dem oder den besagten röhrenförmigen Element oder Elementen (4, 5) ist, in eine zweite Stellung gelangen zu lassen,- diese entspricht der Stellung beim Zusammenbau der Verbindung-, in der der Verschluß (23) von dem oder den besagten röhrenförmigen Element oder Elementen (4, 5) weiter entfemt ist.

2. Vorrichtung nach Anspruch 1, dadurch gekennzeichnet, daß die besagten Laschen (40, 41) der Verschlußplatte (31) die Kerben (46, 46') begrenzen, die sie teilweise verdecken und in denen sich die besagten Widerhaken (21, 22) einer U-förmigen Klammer am Ende der Bewegung zum Einführen der Stutzen (1, 2) in die röhrenförmigen Elemente (4, 5) befinden, d.h. wenn die besagen Arme der elastischen Klammer (20) in den besagten Nuten (55) lagern.

3. Vorrichtung nach einem der Ansprüche 1 oder 2, dadurch gekennzeichnet, daß die röhrenförmigen Elemente mit einem gewissen Elastizitätsgrad miteinander verbunden sind.

4. Vorrichtung nach Anspruch 3, dadurch gekennzeichnet, daß die Elastizität der Verbindung der röhrenförmigen Elemente sich aus einer Verbindung mit Spiel ergibt oder aus der Verbindung durch zwei halbe Teile, die selbst wiederum mit Spiel verbunden sind oder die Möglichkeit haben, relativ zueinander verschoben zu werden.

5. Vorrichtung nach Anspruch 3 oder Anspruch 4, dadurch gekennzeichnet, daß sie zwei elastische Klammern in U-Form umfaßt, die miteinander so verbunden sind, daß die Möglichkeit besteht, sie relativ zueinander zu verschieben.

6. Vorrichtung nach Anspruch 3 oder Anspruch 4, dadurch gekennzeichnet, daß sie eine elastische Klammer in M-Form umfaßt.

## Claims

1. A device for rapid coupling by the locking of a tubular device or of a group of tubular devices to one or several joining pieces, in particular for the assembly of water pipes (6, 7) of the cooling circuit of an engine of a motor vehicle to the inlet and outlet joining pieces (1, 2) of a heat exchanger or unit heater of the said vehicle in which the water pipes (or radiator hoses) are firmly attached to the said tubular devices, the water-tightness between a device and a joining piece or the devices (4, 5) and the joining pieces (1, 2), which are joined by an element disposed approximately perpendicular to their longitudinal axis (A, A'), being assured by joints (8, 9) interposed between them, each joining piece (1, 2) having, at the side of a free cylindrical end, a tapered manifold (53), characterised in that:
- the element joining the tubular devices or associated with the tubular device is a plate (31) disposed in the vicinity of a through opening or openings (16, 17) arranged in the said device or devices and directed approximately transverse to the said longitudinal axes;
- each joining piece (1, 2) has a groove (55) adjacent to the tapered manifold (53) and which is directed correspondingly to the passages (16, 17) of the tubular devices;
- it comprises at least one elastic pin (20) of which each arm (18, 19), housed in one of the said openings (16, 17), terminates at its free end in an angle-bent part (21, 22), directed approximately perpendicular to the said arm, and of which a connector bar (23), connecting the said arms, is generally directed perpendicular to the said openings (16, 17), the angle-bent parts (21, 22) co-operating with corresponding fastening hooks (40, 41) of the plate in such a way that they guide the said angle-bent parts, when the said manifolds (53) elastically space the arms (18, 19) of the pin, - when a joining piece is introduced into a tubular device or joining pieces (1, 2) are introduced into tubular devices (4, 5) -, in order to move them from a first position in which the connector bar (23) is in the immediate vicinity of the said tubular device(s) (4, 5) into a second position, - which is that of assembling the coupling -, where the connector bar (23) is further from the said tubular device(s) (4, 5).

2. A device according to claim 1, characterised in that the said fastening hooks (40, 41) of the plate (31) limit the recesses (46, 46') which they partly mask and into which the said angle-bent parts (21, 22) of an elastic U-shaped pin come to be housed at the end of the introduction movement of the joining pieces (1, 2) into the said tubular devices (4, 5), ie. when the arms of the elastic pin (20) are housed in the said grooves (55).

3. A device according to one of claims 1 or 2, characterised in that the tubular devices are interconnected with a certain degree of flexibility.

4. A device according to claim 3, characterised in that the flexibility of the link interconnecting the tubular devices results from an assembly having free movement or from a link formed by two half-pieces which are themselves linked having free movement or the possibility of relative displacement.

5. A device according to claim 3 or claim 4, characterised in that it comprises two elastic U-shaped pins interconnected with the possibility of relative displacement.

6. A device according to claim 3 or claim 4, characterised in that it comprises an elastic M-shaped pin.
